Europäisches Patentamt

European Patent Office

Office européen des brevets

(11) Veröffentlichungsnummer: **0 013 372**
A1

## (12) EUROPÄISCHE PATENTANMELDUNG

(21) Anmeldenummer: **79105130.3**

(22) Anmeldetag: **13.12.79**

(51) Int. Cl.³: **B 29 J 5/00**
C 08 L 97/02, C 09 J 3/16

(30) Priorität: **28.12.78 DE 2856458**

(43) Veröffentlichungstag der Anmeldung:
**23.07.80 Patentblatt 80/15**

(84) Benannte Vertragsstaaten:
**AT BE CH DE FR IT NL**

(71) Anmelder: **BASF Aktiengesellschaft**
**Carl-Bosch-Strasse 38**
**D-6700 Ludwigshafen(DE)**

(72) Erfinder: **Kaesbauer, Friedrich, Dr. Dipl.-Chem.**
**Neuhofener Strasse 57**
**D-6703 Limburgerhof(DE)**

(72) Erfinder: **Bolz, Werner**
**An der Froschlache 1**
**D-6700 Ludwigshafen(DE)**

(72) Erfinder: **Diem, Hans, Dr. Dipl.-Chem.**
**Feldbergstrasse 63**
**D-6800 Mannheim 25(DE)**

(54) **Verfahren zur Herstellung von Spanholzwerkstoffen und darauf anwendbare gebrauchsfertige Leimharzmischung.**

(57) Mit Formaldehydkondensaten von Harnstoff oder Melamin verleimte Spanplatten weisen eine geringere Formaldehyd-Entwicklung auf, wenn sie Ammoniumcarbonat, -bicarbonat oder -carbaminat enthalten, welches bei der Herstellung zugesetzt wurde.

EP 0 013 372 A1

BASF Aktiengesellschaft                          O. Z. 0050/033591

## Verfahren zur Herstellung von Spanholzwerkstoffen

Die Erfindung betrifft ein Verfahren zur Verringerung der Formaldehydentwicklung von Spanholzwerkstoffen, die mit Formaldehydkondensaten gebunden sind.

Es ist bekannt, daß Formaldehydkondensate von Harnstoff oder Melamin besonders bei Einwirkung von Feuchtigkeit Formaldehyd abspalten. Wenn man sie als Bindemittel zur Herstellung von Holzwerkstoffen verwendet, so erhält man Werkstoffe, die während und nach der Herstellung gasförmigen Formaldehyd an die Umgebung abgeben.

Als ein Mittel zur Beeinflussung dieser lästigen Eigenschaft wird den Bindemitteln gewöhnlich Harnstoff zugesetzt; man nimmt an, daß es besonders in Gegenwart der natürlichen Holz- bzw. Luftfeuchte zu einer Reaktion des Harnstoffs mit dem freien Formaldehyd kommt, d.h. der Harnstoff als Fangsubstanz für den Formaldehyd wirkt. Auch Formaldehyd-Kondensate, die ein geringes Molverhältnis von Formaldehyd zu Aminoplastbildnern aufweisen (z.B. Harnstoff-Harze mit einem Molverhältnis unter 1,5) sind verhältnismäßig stabile Bindemittel, die nur wenig Formaldehyd abgeben. Leider sind diese Bindemittel teurer, weil Harnstoff und besonders Melamin kostspieliger sind als Formaldehyd, und man muß sie auch in größeren Mengen anwenden, weil sie weniger Methylolgruppen aufweisen als formaldehydreiche Bindemittel. Die

0013372

Methylolgruppen sind für die Bindefestigkeit maßgebend.

Die DE-OS 2 553 459 sieht vor, Harnstoff in Form eines Adsorbats an Cellulose zuzusetzen, z.B. in Form von kleinen Fasern oder Fetzen harnstoffgetränkten Papiers. Man hat nämlich beobachtet, daß die formaldehydbindenden Eigenschaften des Harnstoffs besser genutzt werden, wenn dieser räumlich getrennt vom Bindemittel eingebracht wird. Dieser Vorschlag ist allerdings sehr umständlich und setzt eigene Einrichtungen voraus, um die Adsorbate herzustellen.

Ein anderer Weg, die Formaldehydentwicklung aus den Werkstoffen zu verhindern, besteht in der Verwendung von Überzugsmitteln (d.h. Lacken), die formaldehydbindende Mittel enthalten. Abgesehen davon, daß sich solche Lacke nicht immer anwenden lassen, beseitigen sie das Problem nicht an seinem Entstehungsort, sondern erst sekundär. Diese, z.B. aus den DT-PS 1 188 750 bzw. DT-OS 1 669 142 bekannte Lösung hat mit der hier gestellten Aufgabe nichts zu tun.

Die Erfindung hat sich die Aufgabe gestellt, formaldehydbildende Mittel den Holzwerkstoffen selbst auf an sich technisch vorhandenen bzw. bekannten Wegen zuzusetzen, die nicht erst geschaffen werden müssen und keine wesentlichen Kosten verursachen.

Es wurde gefunden, daß man mit Vorteil als formaldehydbindendes Mittel Ammoniumcarbonat, Ammoniumbicarbonat oder Ammoniumcarbaminat verwenden kann. Diese Mittel sind preiswert, können selbst in größeren Mengen zugesetzt werden und machen sich in den fertigen Holzwerkstoffen nicht bemerkbar. Außerdem beeinflussen sie die Bindungsfestigkeit günstig, so daß man mit weniger Bindemittel auskommt.

0013372

Bindemittel auf der Grundlage von Formaldehydkondensaten des Harnstoffs oder Melamins im Sinne der Erfindung sind die üblichen, zur Herstellung von Holzwerkstoffen verwendeten Bindemittel. Sie sind als wäßrige Lösungen oder Pulver im Handel und enthalten Harnstoff- und/oder Melamin-Formaldehyd-Kondensate mit einem Molverhältnis des Formaldehyds zu Harnstoff bzw. Melamin von etwa 1.1 : 1 bis 2 : 1 bzw. 1.3 : 1 bis 2.5 : 1. Auch Mischkondensate und Kondensate, die weitere Bestandteile, z.B. Phenol oder andere Aldehyde enthalten können, sind üblich. Ihre Herstellung und Verwendung ist allgemein bekannt und für die Erfindung ohne Belang.

Erfindungsgemäß behandelt man die zur Herstellung der Spanholzwerkstoffe vorgesehenen Späne bzw. andere zerkleinerte Holzbestandteile (Flachschäben, Stroh, o.ä.) gleichzeitig mit oder getrennt vom Bindemittelauftrag mit einem festen oder wäßrigen Ammoniumsalz der Kohlensäure bzw. Carbaminsäure.

Es versteht sich, daß dieser Zusatz mengenmäßig nach unten nicht begrenzt ist - schon kleine Mengen von etwa 0,1 %, bezogen auf das Bindemittel haben eine meßbare Wirkung. Andererseits kann man selbst 30 % des Harzanteils im Bindemittel durch das Ammoniumsalz ersetzen, ohne daß das Bindemittel unwirksam wird.

Der Zusatz besonders von Ammoniumcarbonat bewirkt bei Harnstoff-Harzen eine gewisse Abbindeverzögerung, die nicht immer erwünscht ist. In diesem Falle empfiehlt es sich, z.B. die Härtermenge (Ammoniumchlorid) zu erhöhen oder einen geeigneten, schneller wirkenden Härter zu verwenden. Man kann auch ein reaktiveres Bindemittel, d.h. ein mit mehr Formaldehyd kondensiertes Harz verwenden, was abgesehen von der Verbilligung je Mengeneinheit noch den Vorteil hat, daß die benötigte Menge (d.h. der Anteil im Holzwerkstoff) geringer sein kann.

0013372

Es ist zwar aus der FR-PS 826 512 bekannt, Aminoplastharzlösungen zu stabilisieren, indem man ihnen z.B. Semicarbazid zusetzt, wobei angegeben ist, daß Semicarbazid in der Lösung aus Hydrazin und Ammoniumcarbonat oder -carbaminat erzeugt werden kann. Hieraus konnte jedoch nicht gefolgert werden, daß der Zusatz von Ammoniumcarbonat oder -carbaminat allein eine irgendwie vorteilhafte Wirkung aufweisen würde, weil Ammoniumcarbonat nach der allgemeinen fachmännischen Erwartung sich in Aminoplastharzlösungen mehr oder weniger schnell zersetzen sollte, wobei auch das Harz ausfallen müßte. Dies ist tatsächlich der Fall - auch die erfindungsgemäß verwendbaren, mit z.B. Ammoniumcarbonat versetzten, verdünnten Leimharzlösungen, die zum Aufsprühen auf die Späne bestimmt sind, müssen alsbald verbraucht werden, was ohnehin üblich ist, da sie auch einen Härter enthalten.

Der Zusatz von Ammoniumcarbonat, -bicarbonat oder -carbaminat zu den Spänen kann zusammen mit der Leimflotte oder unabhängig geschehen; die Anwendung als Lösung ist in jedem Falle zweckmäßig. Es ist normalerweise ausreichend, von der üblichen Leimharzmenge, z.B. 5 bis 10 % festes Harz, berechnet auf absolut trockene (atro) Späne auszugehen und soviel Harz wegzulassen, wie an Ammoniumcarbonat usw. zugesetzt werden soll. Die Menge wird nach der gewünschten Verringerung der Formaldehydabspaltung bemessen - hierfür bietet die beigegebene Figur einen Anhaltspunkt, in der die abgespaltene Formaldehydmenge (mg Formaldehyd je 100 g absolut trocknes Holzgewicht; bestimmt nach der FESYP-Methode) gegen die angewandte Ammoncarbonatmenge aufgetragen ist. Parameter sind das Molverhältnis fünf verschiedener angewandter Harnstoff-Leimharze (1.2-Kurve D; 1.4-Kurve A; 1.6-Kur-ven $B_1$, $B_2$ und 1.8-Kurven $C_1$, $C_2$; 2,0-Kurve E) sowie die Lagerungsdauer (frisch ausgehärtete Platten (Kurven $B_1$, $C_1$) sowie nach 8-tägiger Lagerung; Kurven $B_2$, $C_2$).

Die gebrauchsfertige Ammoniumcarbonat etc. enthaltende Leimflotte ist zum alsbaldigen Verbrauch bestimmt und kann z.B. solche Härter enthalten, die mit Ammoniumcarbonat bei Raumtemperatur verträglich sind. Die üblichen latenten Härter, insbesondere Ammoniumchlorid erfüllen diese Voraussetzung in vorteilhafter Weise.

Wie aus den nachfolgenden Beispielen hervorgeht, sind die sonstigen Bedingungen und Voraussetzungen für die Herstellung von Spanholzwerkstoffen nicht von den üblichen verschieden, besonders was Preßzeit, -temperatur und -druck angeht.

Bemerkenswerterweise verbessert sich nicht nur das Ergebnis hinsichtlich der Neigung zur Formaldehydentwicklung, sondern auch das Quellverhalten der Werkstoffe, die Querzugfestigkeit und andere technische Eigenschaften werden günstig beeinflußt. Dabei kann festgehalten werden, daß erfindungsgemäß hergestellte Holzwerkstoffe im allgemeinen noch gewisse Mengen an Ammoniumcarbonat enthalten; bei entsprechender Behandlung zerkleinerter Probestücke lassen sich Ammoniak und Kohlendioxid freisetzen und nachweisen.

Die Bestimmungsmethode für Formaldehyd (FESYP-Methode) entspricht der in Europa üblichen Perforatormethode. Hierbei werden 100 g Spanplattenprüfkörper in der Größe 25 x 25 mm x Dicke mit siedendem wasserfreien Toluol 2 Stunden lang behandelt und das Destillat mit Wasser ausgezogen. Dabei wird der vorhandene Formaldehyd in dem vorgelegten Wasser gesammelt und anschließend iodometrisch titriert.

0013372

## Beispiel 1

a) Man stellt eine Leimflotte her aus

338 g eines handelsüblichen 65 %igen wäßrigen Harn-
stoff-Formaldehyd-Leimes mit einem Molverhältnis von Formaldehyd zu Harnstoff von 1.4

15 g einer 50 %igen Paraffin-Emulsion (handelsüblich)

36 g 15 %ige Ammoniumchloridlösung (vom Hersteller
des Leims empfohlene Menge)

144 g 14 %ige Ammoniumcarbonatlösung

b) In einem üblichen Mischer (Laborgröße) werden 3150 g
Fichtenholzspäne (Restfeuchte 4,8 %) mit soviel Leim
besprüht, daß eine Leimmenge von 8 % (Festharz, bezogen auf absolut trockene Späne) erreicht wird. Man verpreßt unter üblichen Bedingungen (165°C bei einem Preßdruck von 1.5 bis 2 N/mm$^2$ und einer Preßzeit von 30 Sekunden je mm) zu Platten von 16 mm Stärke. Die Platten
weisen eine Dichte von im Mittel 0,65 auf.

In weiteren Versuchen werden jeweils Leimharze mit
einem Molverhältnis von 1.2; 1.6; 1.8 und 2.0 verarbeitet. Außerdem werden unterschiedliche Mengen an
Harz durch Ammoncarbonat ersetzt und auch je ein Versuch ohne Ammoncarbonat vorgenommen (Vergleich).

c) Die erhaltenen Platten werden nach der FESYP-Methode
untersucht und die Formaldehyd-Abspaltung unmittelbar
nach dem Abkühlen und nach 8 Tagen bestimmt.

Die einzelnen Meßergebnisse, die in der nachfolgenden
Tabelle wiedergegeben sind, werden in der beigegebenen
Figur aufgetragen, wie oben beschrieben.

| Molver-hältnis | Ammonium .../150 Teile Harz | RA ... (mg/100 g atro Späne) | ...feuchte (%) | Querzug (N/mm²) | Biegung (N/mm²) | Quellung (%) nach 2 Std. | Quellung (%) nach 24 Std. |
|---|---|---|---|---|---|---|---|
| 2,0 | ohne | 147,3 | 6,84 | 0,46 | 18,0 | 11,54 | 22,72 |
|  | 4,2 | 106,1 | 6,73 | 0,76 | 19,1 | 7,67 | 15,61 |
|  | 8,3 | 72,3 | 6,47 | 0,74 | 22,7 | 7,87 | 16,56 |
|  | 12,5 | 52,1 | 7,04 | 0,64 | 17,3 | 8,00 | 17,29 |
|  | 16,7 | 33,3 | 6,52 | 0,45 | 18,0 | 9,36 | 23,11 |
|  | 20,8 | 24, | 7,10 | 0,31 | 17,9 | 9,66 | 24,85 |
| 1,8 | ohne | 86,3 | 6,11 | 0,60 | 23,6 | 11,78 | 20,52 |
|  | 4,0 | --- | 6,38 | 0,90 | 24,0 | 6,36 | 13,82 |
|  | 4,2 | 53,1 | 6,08 | 0,84 | 26,6 | 6,92 | 15,03 |
|  | 7,7 | 40,3 | 5,79 | 0,67 | 26,2 | 6,32 | 14,91 |
|  | 8,3 | 34,0 | 5,96 | 0,56 | 24,6 | 7,07 | 16,09 |
|  | 12,5 | 23,6 | 6,27 | 0,61 | 21,6 | 8,15 | 19,23 |
|  | 14,3 | 19,5 | 6,06 | 0,43 | 23,8 | 7,80 | 18,39 |
|  | 16,7 | 15,6 |  | 0, | 21,1 | 10,90 | 24,07 |
| 1,6 | ohne | 75,4 | 6,41 | 0,75 | 23,8 | 7,17 | 14,97 |
|  | 4,0 | 42,6 | 6,05 | 0,66 | 26,7 | 7,33 | 15,07 |
|  | 4,2 | 40,7 | 6,07 | 0,73 | 23,3 | 7,14 | 15,20 |
|  | 7,7 | 27,0 | 5,62 | 0,60 | 24,4 | 8,07 | 16,42 |
|  | 8,3 | 25,0 | 5,81 | 0,50 | 20,0 | 7,86 | 18,52 |
|  | 11,1 | 16,3 | 5,67 | 0,31 | 19,1 | 8,84 | 19,47 |
|  | 12,5 | 14,4 | 5,59 | 0,49 | 19,1 | 10,92 | 23,40 |
|  | 16,7 | 11,5 | 5,38 | 0,77 | 15,4 | 16,69 | 34,91 |
| 1,4 | ohne | 32,8 | 6,40 | 0,70 | 26,8 | 11,70 | 20,05 |
|  | 4,0 | 21,9 | 6,05 | 0,75 | 25,3 | 9,58 | 19,75 |
|  | 4,2 | 20,2 | 6,30 | 0,66 | 24,3 | 9,90 | 19,82 |
|  | 7,7 | 13,1 | 6,41 | 0,50 | 16,9 | 12,99 | 23,40 |
|  | 8,3 | 12,2 | 5,84 | 0,63 | 18,3 | 11,20 | 21,08 |
|  | 11,1 | 9,1 | 5,99 | 0,72 | 19,7 | 15,02 | 27,06 |
|  | 12,5 | 9,0 | 5,99 | 0,72 | 21,9 | 17,83 | 32,36 |
| 1,2 | ohne | 16,3 | 5,65 | 0,67 | 23,5 | 10,48 | 20,36 |
|  | 4,2 | 9,5 | 5,08 | 0,68 | 23,7 | 10,28 | 24,80 |
|  | 8,3 | 7,0 | 5,94 | 0,51 | 24,7 | 12,04 | 27,72 |

0013372

## Beispiel 2

Man verfährt wie vorstehend beschrieben, jedoch werden Leimflotte und Ammoncarbonat-Lösung nacheinander auf die Späne
aufgebracht (Leimflotte zuletzt). Die Verminderung der Formaldehydentwicklung aus den Spanplatten ist in gleichem Maße
wie bei den Versuchen des Beispiels 1 zu beobachten.

0013372

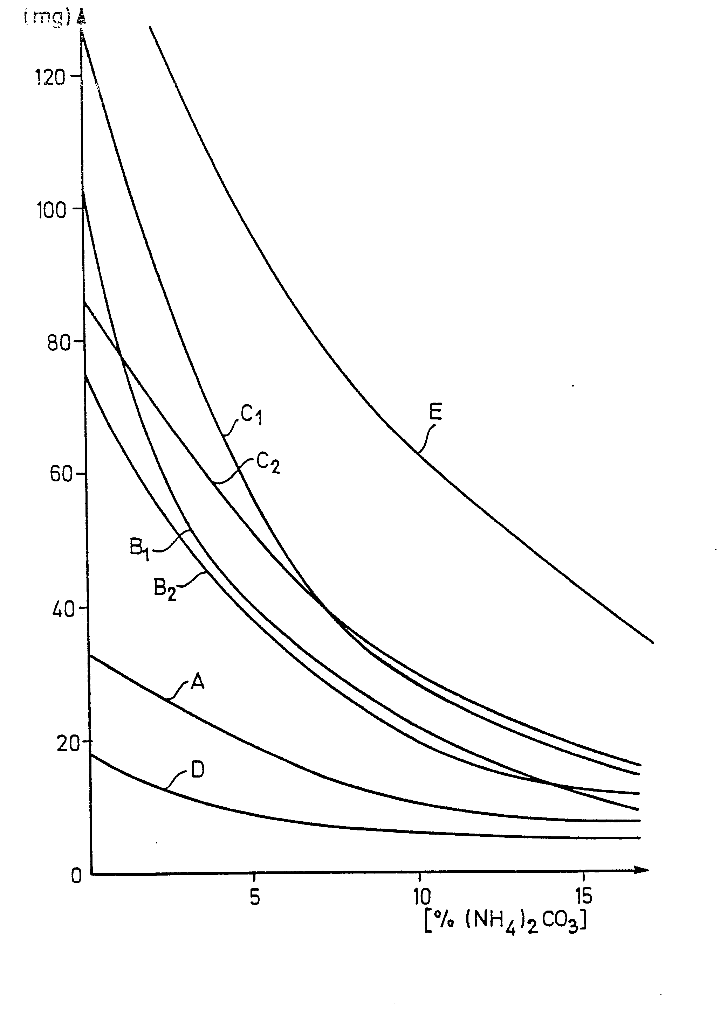

## Patentansprüche

1. Verfahren zur Herstellung von Spanholzwerkstoffen durch Behandeln von Holzspänen bzw. zerkleinerten Holzbestandteilen mit einem wärmehärtbaren Bindemittel auf der Grundlage eines Kondensationsproduktes aus Formaldehyd, Harnstoff und/oder Melamin und Verpressen der Späne unter Wärmeeinwirkung, wobei die Späne vor dem Verpressen außerdem mit Mitteln behandelt werden, die der Verminderung der Formaldehydabspaltung dienen, dadurch gekennzeichnet, daß man die Späne gleichzeitig oder unabhängig von der Bindemittelbehandlung mit Ammoniumcarbonat, -bicarbonat oder -carbaminat behandelt.

2. Gebrauchsfertige Leimharzmischung, enthaltend in wäßriger Lösung 30 bis 60 Gew.-% eines üblichen aminoplastischen Leimharzes und bis zu 25 Gew.-% Ammoniumcarbonat, -bicarbonat oder -carbaminat sowie einen üblichen Härter und ggf. andere Hilfsmittel.

Zeichn.

0013372

Europäisches
Patentamt
**EUROPÄISCHER RECHERCHENBERICHT**

0013372

Nummer der Anmeldung
EP 79 10 5130

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | BE - A - 529 099 (CIBA)  <br> * Seite 1, Zeilen 48-52; Beispiel 4; Ansprüche * | 1,2 |
| P | CHEMICAL ABSTRACTS, Band 90, Nr. 6, 5. Februar 1979, Zusammenfassung Nr. 39809d, Seite 40, Columbus, Ohio, US, I. GIERLINSKA : "Experiments on the restriction of formaldehyde release from particle boards"  <br> & Holztechnologie 1978, 19(3), 164-9  <br> * Zusammenfassung * | 1,2 |
| | US - A - 3 950 472 (CHEH JEN SU)  <br> * Ansprüche * | 1 |
| | CH - A - 243 845 (S.P.A.I.V.)  <br> * Unteranspruch 1 * | 2 |
| A | CH - A - 255 101 (BATA NARODNI)  <br> * Seite 2, Zeilen 25-40 * | 1 |
| A | FR - A - 1 337 900 (COMPTOIR GENERAL DU MIDI)  <br> * Ansprüche * | 1,2 |

**KLASSIFIKATION DER ANMELDUNG (Int Cl. ³)**

B 29 J 5/00
C 08 L 97/02
C 09 J 3/16

**RECHERCHIERTE SACHGEBIETE (Int. Cl ³)**

C 08 L 97/02
C 09 J 3/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort <br> Den Haag | Abschlußdatum der Recherche <br> 22-06-1980 | Prüfer <br> LENSEN |
|---|---|---|

EPA form 1503.1   06.78